(19) Europäisches Patentamt / European Patent Office / Office européen des brevets

(11) **EP 1 756 614 B1**

(12) **EUROPEAN PATENT SPECIFICATION**

(45) Date of publication and mention
of the grant of the patent:
**16.01.2013 Bulletin 2013/03**

(21) Application number: **05737824.2**

(22) Date of filing: **06.05.2005**

(51) Int Cl.:
***G01S 5/02*** (2010.01)

(86) International application number:
**PCT/IB2005/001302**

(87) International publication number:
**WO 2005/111651 (24.11.2005 Gazette 2005/47)**

(54) **LOCATING MOBILE TERMINALS**

FINDEN VON MOBILEN ENDGERÄTEN

LOCALISATION DE TERMINAUX MOBILES

(84) Designated Contracting States:
**AT BE BG CH CY CZ DE DK EE ES FI FR GB GR
HU IE IS IT LI LT LU MC NL PL PT RO SE SI SK TR**

(30) Priority: **12.05.2004 GB 0410610**

(43) Date of publication of application:
**28.02.2007 Bulletin 2007/09**

(73) Proprietor: **Nokia Corporation
02150 Espoo (FI)**

(72) Inventors:
• **SPIRITO, Maurizio, A.
I-10129 Torino (IT)**

• **SILLASTO, Eero
FIN-00170 Helsinki (FI)**

(74) Representative: **Style, Kelda Camilla Karen et al
Page White & Farrer
Bedford House
John Street
London, WC1N 2BF (GB)**

(56) References cited:
**WO-A-2004/016032      WO-A-2004/023155
US-A1- 2003 139 188      US-B1- 6 300 905**

**Description**

Field of the Invention

The present invention relates to a method and an apparatus for locating a mobile terminal in a communications network, particularly but not exclusively using multiple sources of information.

Background to the Invention

The ability to pinpoint the location of mobile terminals is a desirable feature of a mobile telephone network. This is because of the need to provide customer services which rely on knowing the whereabouts of users of these services. For example, up-to-date local traffic information can be provided to enable a user to avoid nearby traffic jams. A user may also wish to know, for example, how to get to the nearest pub or restaurant from their present location. Clearly the location of the user must be ascertained to within even a few metres for this type of service to work.

Another reason for wishing to know the location of a mobile terminal is so that emergency services can locate a caller who is unable to provide an accurate personal location themselves.

It is known in a GSM mobile network to provide the location of a mobile telephone in terms of the cell of the network in which the telephone is located. Each cell contains one base station and a telephone is only ever in traffic communication with one base station at a given time. Hence the location of the telephone to an accuracy of the cell area can be determined simply by ascertaining with which base station the telephone is communicating. Such methods are known as cell-based location methods. Other methods can be combined with the cell identity (CI), such as a triangulation system, in which the location of a particular mobile phone is calculated using control signals from at least the three base stations closest to it (two of which are located in adjacent cells to the cell in which the mobile telephone is located). This system uses the assumption that the distance of the phone from a base station is proportional to the strength of the signal which the base station receives from it, or the time taken for the signal to travel between the phone and the respective base station. Thus the position of the phone can be determined by comparing the relative strengths or travel times of received signals between the three base stations and thus assessing the distance of the user from each base station. The actual location of the user is then obtainable geometrically since the location of the base stations is known and fixed.

In a 3GPP (3rd Generation Partnership Project) network using a Wideband Code Division Multiple Access (W-CDMA) signalling system, it is possible for a mobile terminal to be in active communication with more than one, base station at any one time. This situation is known as "soft handover" and differs from (hard) handover in a GSM system, in which a mobile terminal is "handed over" from one base station to another as it moves between cells of the network. Because of the nature of the soft handover, the above-described cell-based mobile location procedures suitable for GSM can not always be used in a W-CDMA type signalling system. It has therefore been necessary to develop more reliable ways of locating a mobile terminal in this type of signalling system.

In W-CDMA a "softer handover" is defined as well. In the case of "softer handover" the antennas of the base stations with which the mobile station is communicating are co-located (e.g. they are installed at the same physical location or site). In the remainder of this document, the term "soft handover" will be used also to cover the case of "softer handover", and it will be understood by those skilled in the art that the invention and the described embodiments thereof are applicable to a softer handover situation as well as a soft handover situation.

Location techniques are known which are directed towards calculation of a location estimate and a "confidence region" associated with the location estimate of a User Equipment (UE).

One such technique is a Cell Identity and Round Trip Time (CI+RTT) location method.

The CI+RTT location method in UMTS relies on the availability of Round Trip Time (RTT) and Rx-Tx Time Difference (RxTxTD) measurements. RTT and RxTxTD measurements are introduced in UMTS FDD (Frequency Division Duplex) to allow the implementation of the CI+RTT location method.

The RTT is defined as RTT = $T_{Rx}^{UL}$ - $T_{Tx}^{DL}$, where $TD_{TX}^{DL}$ is the time of transmission of the beginning of a downlink dedicated physical channel (DPCH) frame to a User Equipment (UE) and $T_{RX}^{UL}$ is the time of reception of the beginning (the first detected path, in time) of the corresponding uplink DPCCH (Dedicated Physical Control Channel)/ DPDCH (Dedicated Physical Data Channel) frame from the UE.

The RTxTxTD = $T_{Tx}^{UL}$ - $T_{Rx}^{DL}$ is the difference in time between the UE uplink DPCCH/DPDCH frame transmission ($T_{Tx}^{u}L$) and the first detected path (in time) of the downlink DPCH frame from the measured radio link ($T_{Rx}^{DL}$).

RTTs are measured by the base stations, RxTxTDs are measured by the UE.

By combining a pair of RTT and RxTxTD measurements referred to the same base station the distance between the UE and that base station can be estimated. Such distance estimate is analogous to the distance estimate that can be obtained from one Timing Advance (TA) in GSM. In this sense, the CI+RTT location method corresponds to the Cell Identity + Timing Advance (CI+TA) location method in GSM. However, two particular features of UMTS FDD make the CI+RTT method potentially more accurate than the CI+TA method in GSM :

1. The much shorter UMTS chip period as compared to the GSM bit period affects the resolution with which a distance estimate can be determined from a TA in GSM or from an (RTT, RxTxTD) pair in UMTS. One GSM bit period is equivalent to approximately 1100 meters while one UMTS chip period is equivalent to approximately 80 meters, thus the distance measurements resolution in UMTS is better than in GSM.

2. In UMTS a UE can be in soft handover. UMTS standards require that RTTs and RxTxTDs are measured for each active radio link, thus multiple distance estimates can be potentially available for locating one UE in UMTS. In GSM this is not possible since the TA is available only for the unique serving cell.

In the CI+RTT location method the unknown geographical coordinates of the UE whose position it is desired to determine are estimated by combining absolute distance measurements between the UE and the base stations in the active set. Each absolute distance measurement is calculated from each (RTT, RxTxTD) pair.

Existing CI+RTT location methods can be considered to fall broadly into two general categories, single-site location methods and multi-site location methods. There are a number of good, reasonably accurate algorithms for implementing mufti-site location methods when the UE have active radio links with cells located at three or more sites. However, such methods often fail when two or less sites are available for location calculation purposes.

The need for limiting the number of active radio links allocated to a W-CDMA UE (to limit network load) makes the likelihood of calculating a location estimate using only two sites much higher than the likelihood of having three or more sites available for calculating it. Therefore, there is a real need for a location method which is capable of providing a good estimate of the UE location when only two sites are available.

It is noted herein that although the location methods which are discussed are particularly valuable in a situation where there are less than three sites available, they can of course be used in a situation with three or more sites as well.

WO 2004/016032 describes techniques to estimate the position of a wireless terminal. In particular a plurality of transmitters in contact with the wireless terminal is disclosed and an expected area is calculated by the weighting and combination of expected areas associated with each transmitter.

US 2003/139188 describes a geo-location method that determines a location of a mobile-station using a set of candidate locations and signal strength measurements associated with same cell-neighbouring sectors or different cell-neighbouring sectors.

SUMMARY OF THE INVENTION

According to a first aspect of the present invention, there is provided a method of generating a location estimate for a mobile station (UE) in a wireless communications network, the method comprising: receiving first measurement data relating to at least one radio link between a mobile station and a first site wherein the first measurement data is related to radio links of at least two of a plurality of cells supported with the first site; using said first measurement data in a location calculation method with radio network data to provide a first preliminary location estimate; receiving second measurement data relating to at least one radio link between the mobile station and a second site; using said second measurement data in the location calculation method with the radio network data to provide a second preliminary location estimate said second preliminary location estimate comprising generating a second distance estimate using the second measurement data; characterised in that providing the first preliminary location estimate comprises generating a single first distance estimate using the first measurement data of the radio links of the at least two cells by combining the probability density functions of the mobile station distance from each of said at least two of said cells into one probability density function at a radio network controller; and by determining a location estimate as a weighted mass center of the first and second preliminary location estimates.

According to a second aspect, there is provided a network entity in a cellular communications network, wherein the network entity is configured to generate a location estimate for a mobile station in the network, the network entity comprising: implementing means for implementing a location calculation method using measurement data relating to radio links between a mobile station and respective first and second sites and radio network data to provide respective first and second preliminary location estimates said second preliminary location estimate comprising generating a second distance estimate using the second measurement data, characterised in that said implementing means is configured to provide said first preliminary location estimate by generating a single first distance estimate using measurement data of radio links of at least two cells, of a plurality of cells supported by the first site, and to combine the probability density functions of the mobile station distance from each of said at least two cells at a radio network controller; and by further comprising a first determining means for determining a location estimate for the mobile station as a weighted mass center of the first and second preliminary location estimates.

It will be appreciated that there may be more than two cells with established radio links per site.

For a better understanding of the present invention and to show how the same may be carried into effect, reference will now be made to the accompanying drawings.

Brief Description of the Drawings

Figure 1 is a schematic block diagram of distance estimation equipment;
Figure 2 is a diagram illustrating RTT and TD;
Figure 3 is a sketch of part of a cellular communications network;
Figure 4 is a schematic diagram of a WSS location method;
Figure 5 is a schematic diagram of a WSC location method;
Figure 6 is a schematic block diagram of equipment for implementing a CI+RTT location method;
Figure 7 shows an arc-shaped confidence region; and

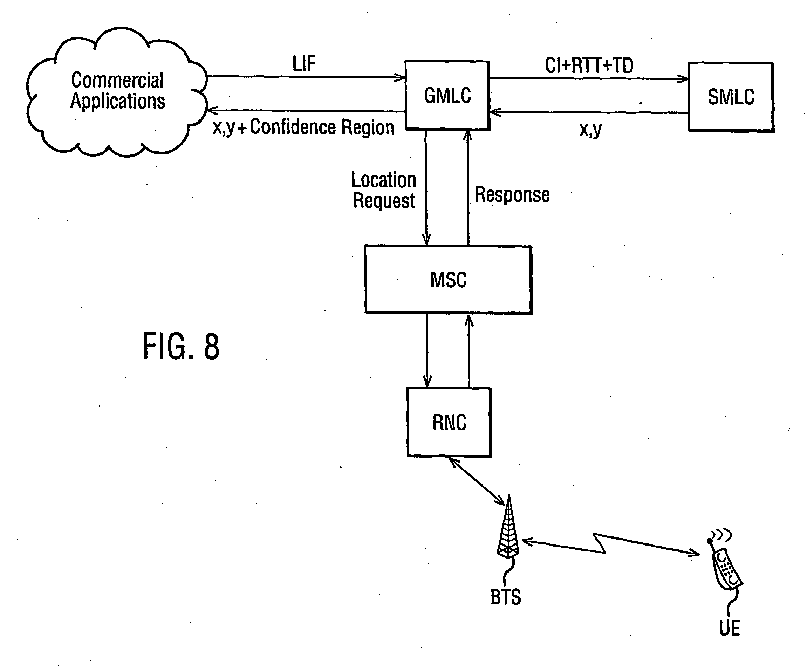

Figure 8 is a schematic diagram of the architecture of a network.

Description of the Preferred Embodiments

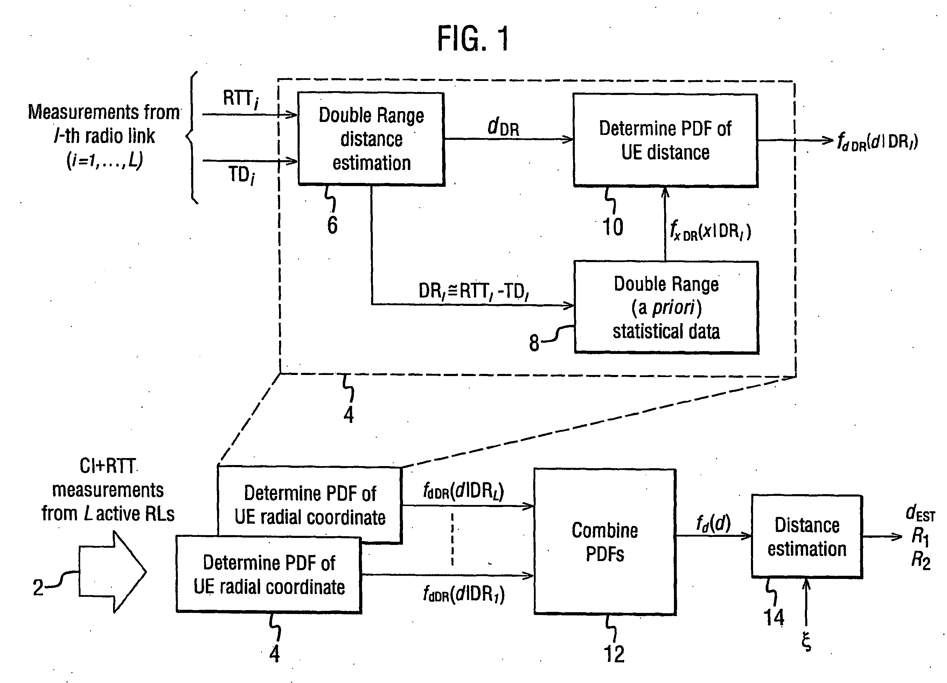

Before describing methods in accordance with embodiments of the present invention, a detailed description of one possibility for calculating a distance estimate will firstly be described with reference to Figure 1, because this is an important component of the location methods discussed in the following. It will be appreciated however that other distance estimation techniques could be used.

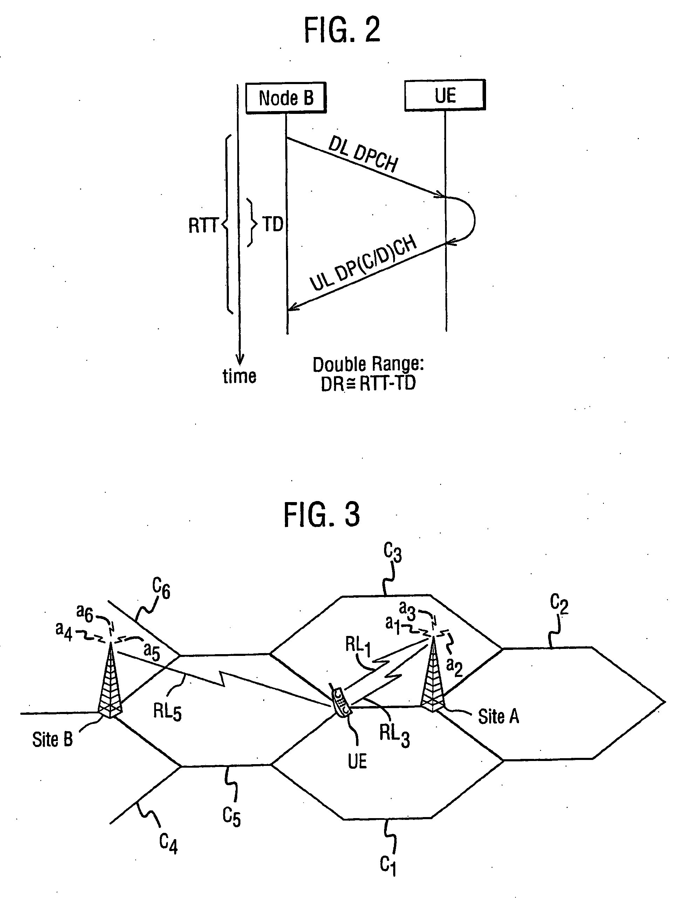

Figure 1 is a schematic block diagram illustrating the blocks involved in a distance estimate calculation obtained from a set of measurement pairs of the round trip time (RTT) and Rx-Tx time difference (TD). Figure 2 illustrates what these distances represent in a mobile communications network. Figure 2 illustrates a user equipment UE which can be in the form of a mobile telephone or other mobile terminal and a Node B, which represents a base station in the universal telecommunications radio access network (UTRAN) system. A downlink dedicated physical channel signal labelled DL DPCH in Figure 2 dispatched from node B takes a certain amount of time to reach the user equipment UE. There is a time delay TD at the user equipment before an uplink response to the downlink signal is returned from the user equipment to Node B. This response is labelled ULDP(C/D)CH in Figure 2. The total circuit time measured from dispatch of the downlink signal to receipt of the corresponding uplink signal is the round trip time RTT. That is, it represents the difference between the time of transmission of the beginning of a downlink dedicated physical channel (DPCH) frame to a user equipment UE and the time of reception of the beginning of the corresponding uplink UL dedicated physical control channel (DPCCH)/dedicated physical data channel (DPDCH) frame from the user equipment.

The time difference TD is, as explained, the difference in time between the uplink ULDPCCH/DPDCH frame transmission and the first detected part of the downlink DPCH frame. This delay is in a typical case nominally equal to 1024 chip periods. A measurement pair of $RTT_I$, $TD_i$ values is supplied to the distance estimation equipment from each i-th active radio link in the mobile communications network. The manner in which measurements for co-located cells (that is cells served from the same site) are dealt with differs depending on the location method which is to be implemented, as will become clear in the following. For the purpose of describing Figure 1, it is assumed that one distance estimate is obtained from a set of RTT, TD measurement pairs measured from active radio links supplied by co-located cells.

The measurement pairs are denoted by arrow 2 in Figure 1, each pair being supplied to a respective probability function determination block 4. Each probability determination block 4 comprises a double range distance estimation calculator 6 which calculates a double range distance estimate $d_{DR}$ from each RTT and TD measurement pair. $d_{DR}$ is an estimate expressed in metres of the distance between the user equipment and the location of node B at the site of the serving cell. It is calculated by converting into metres an integer number, the so-called double range (DR) which is obtained by removing the TD value contribution from the RTT value. A statistical data block 8 holds *a priori* statistical data that has been gathered which gives an estimate of the likely measurement error in the double range distance estimate. That is, given the exact distance between the user equipment UE and the serving cell, d, it is possible to calculate the double range measurement error, $x=d-d_{DR}$. Such an error can arise as a result of several factors: multipath and non-line of sight propagation, measurement algorithms inaccuracy, granularity introduced by the measurements finite resolution, etc. By premeasuring data of this kind, a probability density function of the double range measurement area can be determined and this is supplied to a PDF determination (probability density function determination) block 10 which combines the PDF of DR measurement error $f_{x|DR}(x|DR)$ with the DR distance estimate $d_{DR}$, to obtain the PDF of the UE distance from each co-located serving cell $f_{d|DR}(d|DR)=f_{x|DR}(x=d-d_{DR}|DR)$.

The probability density functions of the distance from all the co-located serving cells is then combined into one probability density function, $f_d(d)$ representing the probability density function of the distance of the user equipment UE from the site where all the serving cells' antennas are installed. This is carried out in the combine PDF block 12. Once the combined PDF is available, the distance estimation is performed in the distance estimation block 14. The result of the distance estimation is represented by three values:

- a distance estimate, $d_{EST} \geq 0$
- an inner radius, $0 \leq R_1 \leq d_{EST}$
- an uncertainty radius, $R2 \geq 0$

The distance estimate $d_{EST}$ is calculated as the median of the combined distance distribution from the PDFs. The inner and uncertainty radii define a confidence interval $[R_1, R_1 + R_2]$ within which the exact distance d of the user equipment UE is estimated to fall with a predefined confidence coefficient, $\xi$. The value of the confidence coefficient depends on the target confidence level requested by the user of the location algorithm, and is input into the distance estimation block 14 as shown in Figure 1.

A description of a technique for estimating the location of a user equipment UE in accordance with a first embodiment of the invention will now be described. Figure 3 illustrates the physical situation in which this method may be used. The method is referred to herein as a weighted single site (WSS) method.

Figure 3 represents part of a cellular communications network illustrating a first base station at Site A and a second base station at Site B. Each base station serves three cells with accordingly oriented antennas. The cells are labelled $C_1$, $C_2$ etc and the antennas are labelled $a_1$, $a_2$ etc. The orientation of the antennas at each site is known, and the assumption is made that the cell identity CI provides network data including for example antenna orientation data. A user equipment UE is shown in softer handover at Site A, that is with a first radio link $RL_1$ established with antenna 1, and a second radio link $RL_3$ established with antenna 3. The user equipment UE also has a radio link $RL_5$ established with antenna 5 of the base station at Site B.

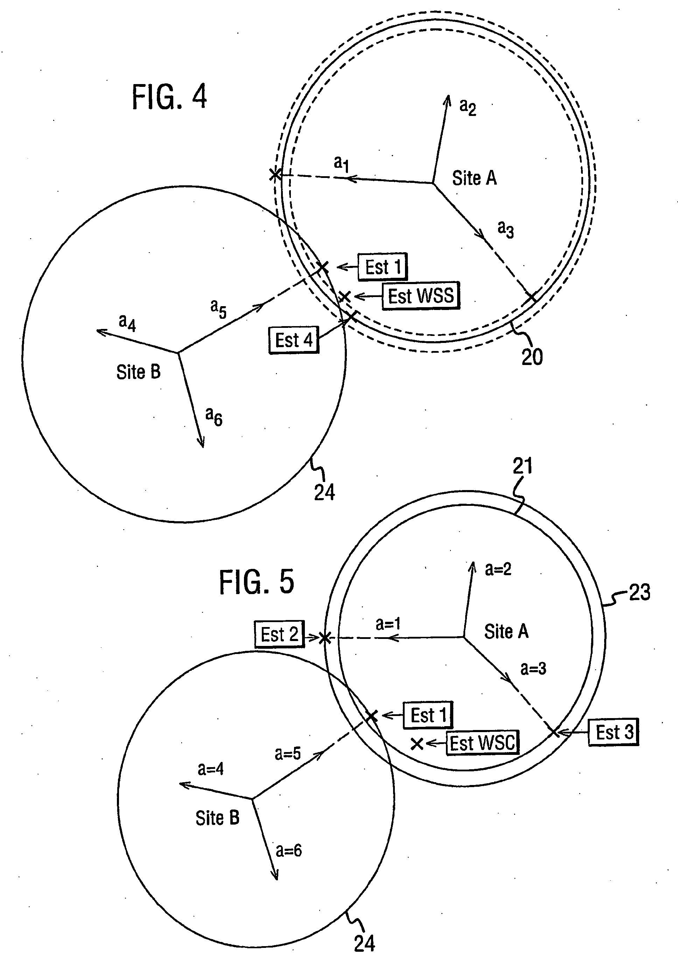

Figure 4 is a schematic diagram illustrating how a location estimate can be obtained using the WSS method in this situation. A first estimated location which is labelled Est 4 in Figure 4 is obtained in the following way. RTT, TD pairs from each of the radio links $RL_1$ and $RL_3$ are combined in the distance estimation equipment illustrated in Figure 1 and an estimated distance $d_{EST}$ is produced, which represents the radius of the circle which is shown in full and labelled 20 in Figure 4. Note that the dotted circles just inside and outside circle 20 represents different measurements for the estimated distance, which will be discussed more fully in relation to the second embodiment discussed below.

A preliminary single site CI+RTT location estimate is obtained using the distance estimate obtained using the technique described above with reference to Figure 1 and an angular estimation arrived at using a single site CI+RTT location based on the network data from the CI. An "averaged" orientation of the two antennas generating the radio links, in this case $a_1$ and $a_3$ is produced. Each preliminary location estimate is calculated in a polar reference system centred at each cell's site, using the single site CI+RTT method discussed later. The first location estimate Est 4 can thus be seen to lie at a distance $d_{EST4}$ along an averaged orientation of the antennas $a_1$, $a_3$. It will readily be appreciated that the orientation value which is used, being based on an average of the two antennas' orientation is a simple but primitive measurement. If more accurate orientation information relating to the user equipment UE is available, that could also be used to determine the first location estimate Est 4.

A second location estimate is obtained for Site B, in this case applying a single RTT, TD measurement pair to the distance estimation equipment of Figure 1 and generating an estimated distance $D_{EST1}$ which in this case represents the radius of the circle denoted 24 in Figure 4. Note that when a single RTT, TD pair is input into the distance estimation equipment of Figure 1, there is no need to perform the combined PDF step of block 12, because only a single PDF is determined which is supplied directly to the distance estimation block 14. In this case, there is a single radio link RL5 and so the location estimate which is labelled Est 1 in Figure 4 is generated by taking the estimated distance $d_{EST1}$ with the orientation of that antenna $a_5$, is the simplest case. Again, the angular estimation for the antenna orientation can be generated using the single site **CI+RTT** location method.

The final location estimate which is labelled EST WSS is obtained as the weighted mass centre of the preliminary location estimates, Est 1, Est 4. That is, the coordinates of the preliminary location estimate are taken (on a polar or Cartesian reference frame), weighted and then averaged.

In a Cartesian reference system, an algorithm which can be used in embodiments of the present invention to obtain the estimated x (and respectively, y) UE coordinates as a weighted average of the x (and respectively, y) site coordinates, the signal of which is received by the MS is given below:

$$\hat{x} = \frac{\sum_{i=1}^{N} w^i x^i}{\sum_{i=1}^{N} w^i} \quad ; \quad \hat{y} = \frac{\sum_{i=1}^{N} w^i y^i}{\sum_{i=1}^{N} w^i} \quad ; \quad (\hat{x}, \hat{y}) \in \mathcal{D}$$

where $w^1, \ldots, w^N$ are suitable weights assigned to each one of the N estimates involved, $\hat{x}$, $\hat{y}$ are the coordinates of the

final estimate and $x^i$, $y^i$ are the coordinates of each preliminary location estimate.

One suitable definition for the i-th weight used in embodiments of the present invention is to use the inverse of the estimated distance, $d_{ESTI}$, associated with each preliminary location estimate:

$$w^i = \frac{1}{d_{ESTI}}$$

An alternative is to apply constant weights for all cells. A further alternative is to use weights equal to the inverse of the area of an arc-shaped confidence region which is determined as a by-product to the preliminary single site **CI+RTT** location calculation (discussed later). Another possible criterion for determining the weights is to assign heigher weights to preliminary location estimates which are believed to originate from more accurate distance measurements.

A location method according to a second embodiment will now be described with reference to Figure 5, referred to as Weighted Single Cell (WSC) method. This method is similar to the method of the first embodiment, the main difference between the two consisting in the way that measurements from co-located cells are treated. Note that the physical situation in which this embodiment can be used is the same as that for the first embodiment, namely the situation of Figure 3. In the WSC method each cell is considered separately from other cells. Thus, the number of preliminary location estimates is equal to the number of RTT, TD measurement pairs. The method is implemented as follows.

Firstly, a distance estimate for each of the serving cells is obtained using the distance estimation equipment of Figure 1 using RTT, TD measurement pairs formed on each of the three active radio links RL1, RL2, RL3. These distance estimates are the respective radii of the circles labelled 21, 23 and 24 (as before). Note that the circles 21 and 23 are those which were illustrated dotted in the embodiment of Figure 4.

A separate preliminary single site **CI+RTT** location estimate is then obtained for each distance estimate, calculated in a polar reference system centred at each cell site. Each preliminary location estimate has a distance from the cell site equal to the distance estimate, and an orientation based on the orientation of the particular antenna for that radio link (unless more accurate direction information is available). The preliminary location estimates are labelled Est 1, Est 2 and Est 3 in Figure 5. The antenna orientations can be established using the single site **CI+RTT** location method.

The final location estimate which is labelled EST WSC is the weighted mass centre of the preliminary location estimates Est 1, Est 2, Est 3. Obtaining the weighted mass centre, and the weighting values is the same as for the WSS method described above.

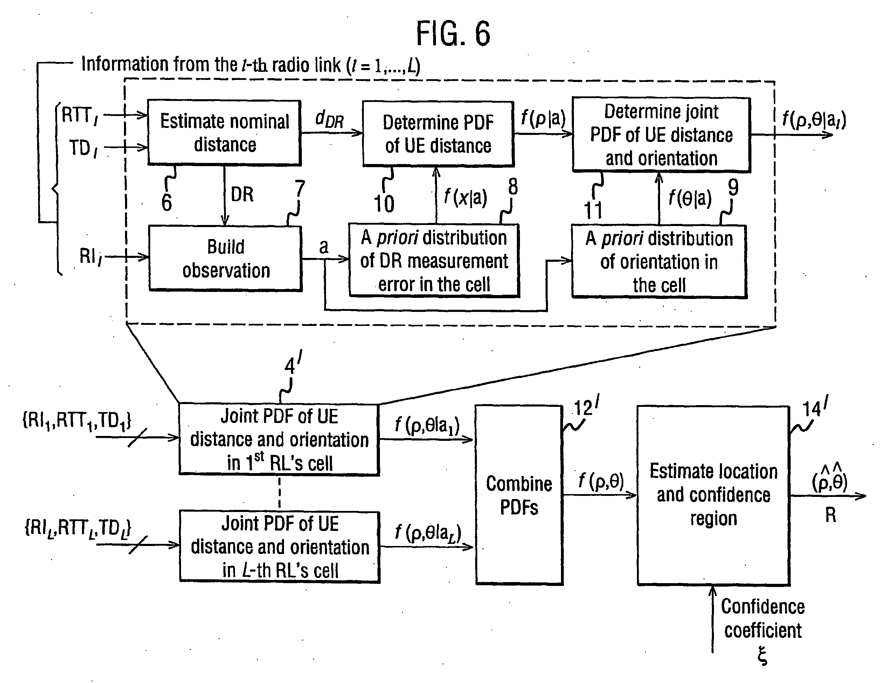

In the above methods, reference is made to a **CI+RTT** location method. One example of such location method will now be described with reference to Figure 6. The aim of the method is to estimate the UE geographical coordinates and a confidence region where the true UE location is supposedly located with a given degree of confidence ξ The estimated UE coordinates are distance ρ and orientation θ of the UE from the serving site, represented in the polar reference system. Note that ρ in Figure 6 corresponds to $D_{EST}$ in Figure 1. In the following, there is some duplicate description relating to the distance estimation already discussed above, but in this case there is no discussion of how to deal with multiple sites. Note too that like numerals in Figure 6 denote like parts in Figure 1.

The estimates are obtained from a probability distribution of the UE geographical location, which is determined by combining observations and *a-priori* statistical information. *A-priori* information includes statistical information about the accuracy of DR as a distance measurement and distribution of the UE orientation within cells border.

Referring to Figure 6, the location procedure can be seen as a combination of different processing steps, briefly described in the following. The quantization rules at the basis of RTT and Rx-Tx Tim Difference definition in UMTS technical specifications, are used to calculate from each {RTT,TD} pair a Double Range Value, DR, and Double Range distance estimate, $d_{DR}$ in block 6. The Double Range is an integer number indicatively equal to the difference RTT-TD; thus it represents an estimate of twice the absolute distance between target UE and (co-located) cells providing the active radio link.

As a result of the nominal distance estimation, the observation a=[RI,DR] (block 7) becomes available. RI is a radio link identifier, for example a cell identifier CI, providing network data.

For example, radio network data for all cells having an active radio link with the user equipment of interest, can include the following:

- antenna coordinates
- bearing of the node B's antenna measured clockwise from x-axis in radian ϕ
- half power beam width (HPBW) of the node B's antenna, Δϕ
- $R_F$ the maximum front radius to the service cell
- $R_B$ the maximum back radius to the service cell

The Double Range distance estimate is a raw conversion of RTT and TD, reported from UMTS network elements, in a distance estimate. This conversion does not take into account effects of measurement process impairments (multipath and non-line-of-sight propagation over the mobile radio channel, measurement errors, quantization error, etc.) that contribute determining the so-called Double range measurement error, $\chi=\rho-d_{DR}$, as defined as difference between the exact distance between UE and node B, $\rho$, and Double Range distance estimate, $d_{DR}$. One way to take into account the DR measurement error, that has proved to be very successful in GSM applications, is to supply the location algorithms with *a-priori* information describing the statistical behaviour of Double Range measurement error, x, as in block 8.

The behaviour of $\chi$ depends on many factors, among them environment and distance between UE and node B. For this reason, the PDF of $\chi$ conditioned by the observation, $f(\chi|a)$, is used as *a-priori* PDF from which the statistical behaviour of the UE distance from the serving site is derived. Once the PDF $f(\chi|a)$ is available, the DR distance estimate, $d_{DR}$, is used to obtain the probability density function (PDF) (block 10) of the UE distance in the cell providing the active radio link, $f(\rho|a)$.

An analogous but simpler procedure is used to determine the PDF of the UE orientation in the cell providing the active radio link, $f(\theta|a)$. The additional simplicity is due to the fact that an orientation measurement is not available, thus statistical distribution of the UE angular distribution can be defined only by using *a-priori* cell-based orientation information (block 9) such as cell orientation, width, etc.

The PDFs of distance conditioned by the observation and of orientation conditioned by the observations are then combined with each other (block 11) to determine the joint PDF of UE distance and orientation within the cell providing each active radio link $f(\rho,\theta a)$. The PDFs available at this stage describe the geographical distribution of users within the borders of each single cell served by node B providing each active radio link.

Once the joint PDFs of distance and orientation within all cells providing active radio links are available (blocks 4') they are combined (block 12') to determine the final joint PDF of distance and orientation, $f(\rho,\theta)$. Such distribution includes all information gathered from observations (radio link identifiers and measurements) and *a-priori* statistics; thus it can be finally used to estimate UE coordinates $(\hat{\rho}, \hat{\theta})$ and confidence region $R$ (block 14'). The priming of blocks 4', 12', 14' denotes that they are equivalent to blocks 4, 12 and 14 of Figure 1, but providing a more complex function.

Thus, the CI+RTT location algorithm provides as outputs:

- location calculation results being a set of parameters identifying the coordinates of a location estimate and the parameters of a certain confidence region (a geographical region where the exact UE location is estimated to be with a certain probability)
- QoS data which is an indication of whether the location calculation results met the accuracy requirements set in the input quality of service parameters.

The CI+RTT location method involves the two main steps of :

1. estimating the location of the UE in terms of x - y coordinates and

2. calculating a confidence region for this location estimate.

A confidence region is a geographical region where the exact UE location is estimated to be with a given probability, referred to as the confidence coefficient $0 < \xi \leq 1$.

The location calculation method is implemented by location calculation algorithms. Two classes of location calculation algorithms are used :

- Location Estimate Calculation Algorithms to implement step 1

- Confidence Region Calculation Algorithms to implement step 2

The combination of location estimate and confidence region parameters is referred to as "shape". The shape definitions supported by the location calculation algorithms described above are:

(i) Point Shape (i.e. including only the location estimate)

(ii) Point with Uncertainty Ellipse Shape (where the confidence region is an ellipse)

(iii) Point with Uncertainty Polygon Shape (where the confidence region is a polygon)

(iv) Point with Uncertainty Arc Shape (where the confidence region is a circular arc)

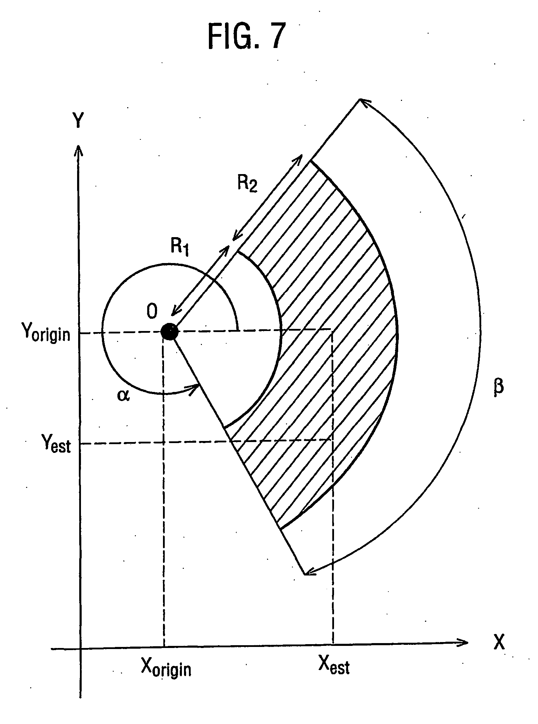

The only confidence region which will be described herein is the Arc-Shape shown in Figure 7.

This has the following features:

- Coordinates of a location estimate $(\hat{x}, \hat{y})$
- Coordinates of an origin $x_o$ and $y_o$
- Inner radius $R1$ and uncertainty radius $R2$
- Offset (orientation) angle $\alpha$ and included angle $\beta$
- Confidence coefficient value $\xi$

In the context of the Single-Site **CI+RTT** method, the polar coordinates can be used to introduce the following formal definition of $R$:

$$\Pr((\rho,\theta) \in R | a_1, \ldots, a_L) = \xi$$

The Arc is the "natural" shape for the Single-Site **CI+RTT** confidence region. The origin of the arc is at the antenna coordinates, common to all cells providing an active radio link to the UE being located:

$$\begin{cases} x_0 = x_S \\ y_0 = y_S \end{cases}$$

Inner radius $R_1$, uncertainty radius $R_2$, offset angle a and included angle $\beta$ (see Figure 7) are calculated by means of the above that, when the confidence region is arc shaped and the PDFs of interest are not conditioned by the observations, can be rewritten as:

$$\Pr((\rho,\theta)\varepsilon R) = \iint_R f(\rho,\theta)d\rho d\theta$$

$$= \int_\alpha^{\alpha+\beta} d\theta \int_{R_1}^{R_1+R} f(\rho,\theta)dp = \xi$$

The total probability theorem can be invoked to write $f(\rho,\theta)$ as:

$$f(\rho,\theta) = \sum_{m=1}^{M} p_m f(\rho,\theta|a_m)$$

hence

$$\Pr((\rho,\theta)\varepsilon R) = \int_\alpha^{\alpha+\beta} d\theta \int_{R_1}^{R_1+R_2} \left[ \sum_{m+1}^{M} p_m f(\rho,\theta|a_m) \right] d\rho$$

The confidence region parameters $R_1, R_2$, a and $\beta$ can be uniquely determined if appropriate additional constraints are introduced, according to requirements of a particular implementation.

Figure 7 is a schematic diagram of the architecture of a network to illustrate where the location methods described above are implemented. A single base station BTS is shown, which can for example be the base station at site A or site B. In fact, base stations at both site A and site B will be in communication with a radio network controller RNC as illustrated for the single base station in Figure 7. The radio network controller is in communication with a mobile switching MSC which is in turn in communication with a gateway mobile location center GMLC. The gateway mobile location center can receive an LIF (Location Interoperability Forum) request from commercial applications being implemented in the network. The gateway mobile location center dispatches a location request to the mobile switching center which in turn contacts the radio network controller to obtain the necessary network data and return it to the mobile switching center. A response is thus returned to the gateway mobile location center which supplies CI+RTT, TD pairs to a serving mobile location center SMLC. The location methods described hereinabove are implemented at the serving mobile location center and the x, y data is returned to the gateway mobile location center. The gateway mobile location center returns this x, y data together with the confidence region to the commercial application which requested the location data.

Alternatively, the location methods can be implemented at the RNC or in a stand-alone module elsewhere in the network.

**Claims**

1. A method of generating a location estimate for a mobile station (UE) in a wireless communications network, the method comprising:

   receiving first measurement data relating to at least one radio link between a mobile station and a first site wherein the first measurement data is related to radio links of at least two of a plurality of cells supported with the first site;
   using said first measurement data in a location calculation method with radio network data to provide a first preliminary location estimate;
   receiving second measurement data relating to at least one radio link between the mobile station and a second site;
   using said second measurement data in the location calculation method with the radio network data to provide a second preliminary location estimate said second preliminary location estimate comprising generating a second distance estimate using the second measurement data; **characterised in that**
   providing the first preliminary location estimate comprises generating a single first distance estimate using the first measurement data of the radio links of the at least two cells by combining the probability density functions of the mobile station distance from each of said at least two of said cells into one probability density function at a radio network controller; and by
   determining a location estimate as a weighted mass center of the first and second preliminary location estimates.

2. The method of claim 1 further comprising:

   supporting the plurality of cells at the first site;
   relating radio links of the at least two cells with the first measurement data.

3. The method according to claim 1 or 2, further comprising:

   determining the weighted mass center by a method including;
   weighting the first preliminary location estimate with a first weighting value,
   weighting the second preliminary location estimate with a second weighting value, and
   determining a mass center of a thus weighted first preliminary location estimate and of a thus weighted second preliminary location estimate.

4. The method according to claim 3, wherein the first and second weighting values are substantially equal to each other.

5. The method according to claim 1 or 2, further comprising:

   generating, using the location calculation method, a confidence region of a predetermined shape representing a geographical region where the mobile station (UE) is estimated to be located with a certain probability.

6. The method according to claim 5, further comprising:

   generating the weighted mass center by applying a first weighting value to the first preliminary location estimate;

applying a second weighting value to the second preliminary location estimate; and

obtaining the mass center of the first and second weighted preliminary location estimates,

wherein the first and second weighting values represent an inverse of an area of the shape of the confidence region generated by the location calculation method.

7. The method according to claim 3, further comprising the step of determining the weighted mass centre by weighting the first and second preliminary location estimates with first and second weighting values that are related to the first and second distance estimates, respectively.

8. The method according to claim 1 or 2, wherein the first site supports at least first and second located cells (c1; c2; c3), and wherein the first

measurement data relates to a first radio link from the first located cell, and further measurement data is received which relates to a second link from the second located cell, the method further comprising:

using the further measurement data in the location calculation method with radio network data to provide a further preliminary location estimate which is used with the first and second preliminary location estimates to generate the weighted mass center of a location estimate of the mobile station (UE).

9. The method according to claim 8, wherein using said first and said further measurement data to provide said first and second preliminary location estimates comprises generating respective distance estimates.

10. The method according to claim 1 or 2, wherein said radio network data comprises antenna orientation data.

11. A network entity in a cellular communications network, wherein the network entity is configured to generate a location estimate for a mobile station (UE) in the network, the network entity comprising:

implementing means for implementing a location calculation method using measurement data relating to radio links between a mobile station and respective first and second sites and radio network data to provide respective first and second preliminary location estimates, said second preliminary location estimate comprising generating a second distance estimate using second measurement data, **characterised in that** said implementing means is configured to provide said first preliminary location estimate by generating a single first distance estimate using measurement data of radio links of at least two cells, of a plurality of cells (c1; c2; c3) supported by the first site, and to combine the probability density functions of the mobile station distance from each of said at least two cells at a radio network controller; and by further comprising a

first determining means for determining a location estimate for the mobile station as a weighted mass center of the first and second preliminary location estimates.

12. The network entity according to claim 11, further comprising:

generating means for generating first and second weighting values for respectively weighting the first and second preliminary location estimates.

13. The network entity according to claim 12, wherein the generating means comprises second determining means for determining a confidence region of a predetermined shape representing a geographical region where the mobile station is estimated to be located with a certain probability, and using an area of said confidence region to determine the first and second weighting values.

14. The network entity of any of claims 11 to 13, wherein the network entity is a radio network controller.

15. The network entity according to any of claims 11 to 14 wherein the implementing means is a first processor and the first determining means is a second processor.

**Patentansprüche**

1. Verfahren zum Erzeugen einer Positionsschätzung für ein Mobilgerät (UE) in einem drahtlosen Kommunikationsnetzwerk, wobei das Verfahren umfasst:

Empfangen erster Messdaten in Bezug auf zumindest eine Funkverbindung zwischen einem Mobilgerät und einer ersten Stelle, wobei die ersten Messdaten auf Funkverbindungen von zumindest zwei von einer Mehrzahl von durch die erste Stelle Zeiten bezogen sind;

Verwenden der ersten Messdaten in einem Positionsberechnungsverfahren mit Funknetzwerkdaten zum Bereitstellen einer ersten vorläufigen Positionsschätzung;

Empfangen zweiter Messdaten in Bezug auf zumindest eine Funkverbindung zwischen dem Mobilgerät und einer zweiten Stelle;

Verwenden der zweiten Messdaten in dem Positionsberechnungsverfahren mit den Funknetzwerkdaten zum Bereitstellen einer zweiten vorläufigen Positionsschätzung, wobei die zweite vorläufige Positionsschätzung das Erzeugen einer zweiten Abstandsschätzung unter Verwendung der zweiten Messdaten umfasst;

**dadurch gekennzeichnet, dass**

das Bereitstellen der ersten vorläufigen Positionsschätzung das Erzeugen einer einzelnen ersten Abstandsschätzung unter Verwendung der ersten Messdaten der Funkverbindungen der zumindest zwei Zellen durch Kombinieren der Wahrscheinlichkeitsdichtefunktionen des Mobilgerätabstands von jeder der zumindest zwei der Zellen zu einer Wahrscheinlichkeitsdichtefunktion bei einer Funknetzwerksteuerung umfasst; und durch Bestimmen einer Positionsschätzung als gewichteter Schwerpunkt der ersten und zweiten vorläufigen Positionsschätzungen.

2. Verfahren nach Anspruch 1, ferner **gekennzeichnet durch**:

   Stützen der Mehrzahl von Zellen an der ersten Stelle;
   in Beziehung Bringen von Funkverbindungen der zumindest zwei Zellen mit den ersten Messdaten.

3. Verfahren nach Anspruch 1 oder 2, ferner **gekennzeichnet durch**:

   Bestimmen des gewichteten Schwerpunkts **durch** ein Verfahren mit
   Gewichten der ersten vorläufigen Positionsschätzung mit einem ersten Gewichtungswert,
   Gewichten der zweiten vorläufigen Positionsschätzung mit einem zweiten Gewichtungswert, und
   Bestimmen eines Schwerpunkts einer so gewichteten ersten vorläufigen Positionsschätzung und einer so gewichteten zweiten vorläufigen Positionsschätzung.

4. Verfahren nach Anspruch 3, **dadurch gekennzeichnet, dass** der erste und zweite Gewichtungswert im Wesentlichen gleich sind.

5. Verfahren nach Anspruch 1 oder 2, ferner **gekennzeichnet durch**:

   Erzeugen, unter Verwenden des Positionsberechnungsverfahrens, eines Vertrauensbereichs einer vorgegebenen Kontur, die eine geographische Region repräsentiert, in der das Mobilgerät (UE) mit einer bestimmten Wahrscheinlichkeit positioniert angenommen wird.

6. Verfahren nach Anspruch 5, ferner **gekennzeichnet durch**:

   Erzeugen des gewichteten Schwerpunkts **durch** Anwenden eines ersten Gewichtungswertes auf die erste vorläufige Positionsschätzung;
   Anwenden eines zweiten Gewichtungswertes auf die zweite vorläufige Positionsschätzung; und
   Erhalten des Schwerpunkts der ersten und zweiten gewichteten vorläufigen Positionsschätzungen,
   wobei der erste und zweite Gewichtungswert eine Umkehrfunktion einer Fläche der Kontur des **durch** das Positionsberechnungsverfahren erzeugten Vertrauensbereichs repräsentieren.

7. Verfahren nach Anspruch 3, ferner **gekennzeichnet durch** den Schritt des Bestimmen des gewichteten Schwerpunkts **durch** Gewichten der ersten und zweiten vorläufigen Positionsschätzungen mit ersten und zweiten Gewichtungswerten, die jeweils auf die erste und zweite Abstandsschätzungen bezogen sind.

8. Verfahren nach Anspruch 1 oder 2, **dadurch gekennzeichnet, dass** die erste Stelle zumindest erste und zweite angeordnete Zellen (c1;c2;c3) stützt, und dass die ersten Messdaten zu einer erster Funkverbindung von der ersten angeordneten Zelle gehören, und weitere Messdaten empfangen werden, die zu einer zweiten Verbindung von der zweiten angeordneten Zelle gehören, wobei das Verfahren weiter umfasst:

Verwenden der weiteren Messdaten im Positionsberechnungsverfahren mit Funknetzwerkdaten zum Bereitstellen einer weiteren vorläufigen Positionsschätzung, welche mit den ersten und zweiten vorläufigen Positionsschätzungen zum Erzeugen des gewichteten Schwerpunkts einer Positionsschätzung des Mobilgerätes (UE) verwendet werden.

9. Verfahren nach Anspruch 8, **dadurch gekennzeichnet, dass** das Verwenden der ersten und der weiteren Messdaten zum Bereitstellen der ersten und zweiten vorläufigen Positionsschätzungen das Erzeugen entsprechender Abstandsschätzungen umfasst.

10. Verfahren nach Anspruch 1 oder 2, **dadurch gekennzeichnet, dass** die Funknetzwerkdaten Antennenausrichtungsdaten umfassen.

11. Netzwerkeinheit in einem Mobilfunknetzwerk, wobei die Netzwerkeinheit zum Erzeugen einer Positionsschätzung für ein Mobilgerät (UE) in dem Netzwerk eingerichtet ist, wobei die Netzwerkeinheit umfasst:

ein Implementierungsmittel zum Implementieren eines Positionsberechnungsverfahrens, das Messdaten bezüglich Funkverbindungen zwischen einem Mobilgerät und entsprechenden ersten und zweiten Stellen und Funknetzwerkdaten verwendet, um entsprechend erste und zweite vorläufige Positionsschätzungen bereitzustellen, wobei die zweite vorläufige Positionsschätzung ein Erzeugen einer zweiten Abstandsschätzung unter Verwenden zweiter Messdaten umfasst, **dadurch gekennzeichnet, dass** das Implementierungsmittel zum Bereitstellen der ersten vorläufigen Positionsschätzung durch Erzeugen einer einzelnen ersten Abstandsschätzung unter Verwenden von Messdaten von Funkverbindungen von zumindest zwei Zellen einer Mehrzahl von durch die erste Stelle gestützten Zellen (c1; c2; c3), und zum Kombinieren der Wahrscheinlichkeitsdichtefunktionen des Mobilgerätabstands von jeder der zumindest zwei Zellen an einem Funknetzwerkcontroller eingerichtet ist, und dass ferner ein erstes Bestimmungsmittel zum Bestimmen einer Positionsschätzung für das Mobilgerät als ein gewichtete Schwerpunkt der ersten und zweiten vorläufigen Positionsschätzungen umfasst ist.

12. Netzwerkeinheit nach Anspruch 11, ferner **gekennzeichnet durch**: Erzeugungsmittel zum Erzeugen von ersten und zweiten Gewichtungswerten zum entsprechenden Gewichten der ersten und zweiten vorläufigen Positionsschätzungen.

13. Netzwerkeinheit nach Anspruch 12, **dadurch gekennzeichnet, dass** das Erzeugungsmittel zweite Bestimmungsmittel zum Bestimmen eines Vertrauensbereichs einer vorgegebenen Kontur, die eine geographische Region repräsentiert, in der das Mobilgerät mit einer bestimmten Wahrscheinlichkeit positioniert angenommen wird, und zum Verwenden einer Fläche des Vertrauensbereichs, um die ersten und zweiten Gewichtungswerte zu bestimmen, umfasst.

14. Netzwerkeinheit nach einem der Ansprüche 11 bis 13, **dadurch gekennzeichnet, dass** die Netzwerkeinheit ein Funknetzwerkcontroller ist.

15. Netzwerkeinheit nach einem der Ansprüche 11 bis 14, **dadurch gekennzeichnet, dass** das Implementierungsmittel ein erster Prozessor und das erste Bestimmungsmittel ein zweiter Prozessor ist.

## Revendications

1. Procédé de génération d'une estimation de localisation d'une station mobile (UE) dans un réseau de communication sans fil, ledit procédé comprenant les étapes suivantes consistant à :

recevoir des premières données de mesure concernant au moins une liaison radio entre une station mobile et un premier site, dans lequel les premières données de mesure concernent des liaisons radio d'au moins deux cellules parmi une pluralité de cellules prise en charge par le premier site ;
utiliser lesdites premières données de mesure dans un procédé de calcul de localisation avec des données de réseau radio afin de fournir une première estimation de localisation préliminaire ;
recevoir des deuxièmes données de mesure concernant au moins une liaison radio entre la station mobile et un deuxième site ;
utiliser lesdites deuxièmes données de mesure dans le procédé de calcul de localisation avec les données de réseau radio afin de fournir une deuxième estimation de localisation préliminaire, ladite deuxième estimation de localisation préliminaire comprenant l'étape consistant à générer une deuxième estimation de distance en utilisant les deuxièmes données de mesure ;

**caractérisé en ce que**

l'étape consistant à obtenir la première estimation de localisation préliminaire comprend la génération d'une première estimation de distance individuelle en utilisant les premières données de mesure des liaisons radio desdites au moins deux cellules en combinant les fonctions de densité de probabilité de la distance de la station mobile par rapport à chacune desdites au moins deux cellules en une seule fonction de densité de probabilité au niveau d'un contrôleur de réseau radio ; et **caractérisé par** l'étape consistant à :

déterminer une localisation sous la forme d'un centre de masse pondéré des première et deuxième estimations de localisation préliminaires.

2. Procédé selon la revendication 1, comprenant en outre les étapes suivantes consistant à :

héberger la pluralité de cellules au niveau du premier site ;
mettre en relation des liaisons radio desdites au moins deux cellules avec les premières données de mesure.

3. Procédé selon la revendication 1 ou la revendication 2, comprenant en outre l'étape consistant à :

déterminer le centre de masse pondéré au moyen d'un procédé comprenant les étapes suivantes consistant à :

pondérer de la première estimation de localisation préliminaire avec une première valeur de pondération, pondérer de la deuxième estimation de localisation préliminaire avec une deuxième valeur de pondération, et déterminer d'un centre de masse d'une première estimation de localisation préliminaire ainsi pondérée et d'une deuxième estimation de localisation préliminaire ainsi pondérée.

4. Procédé selon la revendication 3, dans lequel les première et deuxième valeurs de pondération sont sensiblement égales.

5. Procédé selon la revendication 1 ou la revendication 2, comprenant en outre l'étape consistant à :

générer, en utilisant le procédé de calcul de localisation, une région de confiance de forme prédéterminée représentant une région géographique où l'on estime que la station mobile (UE) est localisée avec une certaine probabilité.

6. Procédé selon la revendication 5, comprenant en outre les étapes suivantes consistant à :

générer le centre de masse pondéré en appliquant une première valeur de pondération à la première estimation de localisation préliminaire ;
appliquer d'une deuxième valeur de pondération à la deuxième estimation de localisation préliminaire ; et obtenir le centre de masse des première et deuxième estimations de localisation préliminaires pondérées, dans lequel les première et deuxième valeurs de pondération représentent l'inverse d'une aire de la forme de la région de confiance générée par le procédé de calcul de localisation.

7. Procédé selon la revendication 3, comprenant en outre l'étape consistant à déterminer le centre de masse pondéré en pondérant les première et deuxième estimations de localisation préliminaires avec des première et deuxième valeurs de pondération qui concernent respectivement les première et deuxième estimations de distance.

8. Procédé selon la revendication 1 ou la revendication 2, dans lequel le premier site prend en charge au moins des première et deuxième cellules localisées (c1 ; c2 ; c3) et dans lequel les premières données de mesure concernent une première liaison radio depuis la première cellule localisée, et des données de mesure supplémentaires concernant une deuxième liaison sont reçues en provenance de la deuxième cellule localisée, le procédé comprenant en outre l'étape consistant à :

utiliser les données de mesure supplémentaires dans le procédé de calcul de localisation avec des données de réseau radio afin de fournir une estimation de localisation préliminaire supplémentaire qui est utilisée avec les première et deuxième estimations de localisation préliminaires afin de générer le centre de masse pondéré d'une estimation de localisation de la station mobile (UE).

**9.** Procédé selon la revendication 8, dans lequel l'utilisation desdites première et desdites données de mesure supplémentaires pour obtenir lesdites première et deuxième estimations de localisation préliminaires comprend la génération d'estimations de distance respectives.

**10.** Procédé selon la revendication 1 ou la revendication 2, dans lequel lesdites données de réseau radio comprennent des données d'orientation d'antenne.

**11.** Entité de réseau dans un réseau de communication cellulaire, dans lequel ladite entité de réseau est configurée pour générer une estimation de localisation pour une station mobile (UE) dans le réseau, l'entité de réseau comprenant :

des moyens de mise en oeuvre pour mettre en oeuvre un procédé de calcul de localisation en utilisant des données de mesure concernant des liaisons radio entre une station mobile et des premier et deuxième sites respectifs et des données de réseau radio afin de fournir des première et deuxième estimations de localisation préliminaires respectives, ladite deuxième estimation de localisation préliminaire comprenant la génération d'une deuxième estimation de distance en utilisant des deuxièmes données de mesure, **caractérisée en ce que** lesdits moyens de mise en oeuvre sont configurés pour fournir ladite première estimation de localisation préliminaire en générant une première estimation de distance individuelle en utilisant des données de mesure de liaisons radio d'au moins deux cellules d'une pluralité de cellules (c1 ; c2 ; c3) prises en charge par le premier site, et pour combiner les fonctions de densité de probabilité de la distance de la station mobile par rapport à chacune desdites au moins deux cellules au niveau d'un contrôleur de réseau radio ; et **en ce qu'**elle comprend en outre un premier moyen de détermination pour déterminer une estimation de localisation de la station mobile sous la forme d'un centre de masse pondéré des première et deuxième estimations de localisation préliminaires.

**12.** Entité de réseau selon la revendication 11, comprenant en outre :

des moyens de génération pour générer des première et deuxième valeurs de pondération pour pondérer respectivement les première et deuxième estimations de localisation préliminaires.

**13.** Entité de réseau selon la revendication 12, dans laquelle les moyens de génération comprennent un deuxième moyen de détermination pour déterminer une région de confiance d'une forme prédéterminée représentant une région géographique où l'on estime que la station mobile est localisée avec une certaine probabilité, et l'utilisation d'une zone de ladite région de confiance afin de déterminer les première et deuxième valeurs de pondération.

**14.** Entité de réseau selon l'une quelconque des revendications 11 à 13, dans laquelle l'entité de réseau est un contrôleur de réseau radio.

**15.** Entité de réseau selon l'une quelconque des revendications 11 à 14, dans laquelle les moyens de mise en oeuvre sont un premier processeur et le premier moyen de détermination est un deuxième processeur.

## FIG. 1

# FIG. 2

Double Range:
DR ≅ RTT-TD

# FIG. 3

# FIG. 4

# FIG. 5

# FIG. 6

Information from the *l*-th radio link (*l* = 1,...,*L*)

$RTT_l$ → **Estimate nominal distance** $\xrightarrow{d_{DR}}$ **Determine PDF of UE distance** $\xrightarrow{f(\rho|a)}$ **Determine joint PDF of UE distance and orientation** $\rightarrow f(\rho,\theta|a_l)$

$TD_l$ →

6

↓ DR    7

$f(x|a)$  8    $f(\theta|a)$  9

$RI_l$ → **Build observation** $\xrightarrow{a}$ **A priori distribution of DR measurement error in the cell**    11    **A priori distribution of orientation in the cell**

10

$4^l$

$\{RI_1, RTT_1, TD_1\}$ → **Joint PDF of UE distance and orientation in 1st RL's cell** $\xrightarrow{f(\rho,\theta|a_1)}$

$12^l$

$14^l$

$\{RI_L, RTT_L, TD_L\}$ → **Joint PDF of UE distance and orientation in L-th RL's cell** $\xrightarrow{f(\rho,\theta|a_L)}$ **Combine PDFs** $\xrightarrow{f(\rho,\theta)}$ **Estimate location and confidence region** $\xrightarrow{(\hat{\rho},\hat{\theta})} R$

Confidence coefficient $\xi$

EP 1 756 614 B1

# FIG. 7

FIG. 8

EP 1 756 614 B1

**EP 1 756 614 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004016032 A
- US 2003139188 A